# EUROPEAN PATENT APPLICATION

(11) **EP 4 053 588 A1**
(43) Date of publication of application: **07.09.2022**
(21) Application number: 22158126.7
(22) Date of filing: 23.02.2022
(51) Int. Cl.: G01S 7/481

(54) **OPTICAL SENSING SYSTEM**

(30) Priority: 01.03.2021 CN 202110226146
(71) Applicant: Coretronic Corporation, Hsin-Chu 300 (TW)
(72) Inventor: WENG, YI-HSUANG, 300 Hsin-Chu (TW)
(74) Representative: Ter Meer Steinmeister & Partner

(57) **Abstract**

The invention provides an optical sensing system to sense a target object. The optical sensing system includes a light source, a beam splitting element, a reflective element, a grating element, a diaphragm element, and a sensing element. The light source provides a first light beam. The beam splitting element passes the first light beam and reflects a second light beam. The reflective element reflects the first light beam to the target object and reflects the second light beam transmitted from the target object. The grating element changes emergent angles of a plurality of sub-light beams of the second light beam according to wavelengths of the sub-light beams. The diaphragm element allows a sensing light beam including a specific wavelength range in the sub-light beams to pass and blocks the other sub-light beams. The sensing element is disposed on a transmission path of the sensing light beam.

## Description

This application claims the priority benefit of China application serial no. 202110226146.8, filed on March 1, 2021.

### BACKGROUND OF THE INVENTION

### Field of the Invention

The invention relates to an optical system, and more particularly to an optical sensing system.

### Description of Related Art

An optical radar, or light detection and ranging (LiDAR) for short, is an optical remote sensing technique that measures the distance of a target and other parameters by irradiating a beam of light, usually a pulsed laser, to the target. LiDAR has applications in fields such as surveying and mapping, archaeology, geography, geomorphology, seismology, forestry, remote sensing, and atmospheric physics. In addition, this technique is also used in specific applications such as contour drawing including airborne laser mapping, laser height measurement, and LiDAR.

In the current common architecture, the emitted light intensity and the received light intensity may not be effectively utilized, and the light intensity is a key parameter that determines the detection range of the optical radar, which also causes the detection range of the optical radar to become shorter.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides an optical sensing system that may reduce non-sensing light entering a sensing element, thereby improving the sensing effect of the optical sensing system.

Other objects and advantages of the invention may be further understood from the technical features disclosed by the invention.

The object is solved by the features of the independent claims. Preferred embodiments are given in the dependent claims.

In order to achieve one or part or all of the above objects or other objects, the invention provides an optical sensing system configured to sense a target object. The optical sensing system includes a light source, a beam splitting element, a reflective element, a grating element, a diaphragm element, and a sensing element. The light source is configured to provide a first light beam. The beam splitting element is disposed on a transmission path of the first light beam, and is configured to allow the first light beam to pass through and to reflect the second light beam. The reflective element is configured on the transmission path of the first light beam and configured to reflect the first light beam to the target object, and configured to reflect the second light beam from the target object. The grating element is disposed on a transmission path of the second light beam, and is configured to change emergent angles of a plurality of sub-light beams of the second light beam according to wavelengths of the plurality of sub-light beams. The diaphragm element is disposed on a transmission path of the plurality of sub-light beams, and configured to allow a sensing light beam including a specific wavelength range in the plurality of sub-light beams to pass and block the other plurality of sub-light beams. The sensing element is disposed on a transmission path of the sensing light beam.

In one or more embodiments, focal planes of the plurality of sub-light beams may be all different.

In one or more embodiments, the light source may be an infrared light-emitting element.

In one or more embodiments, a wavelength range of an infrared light emitted by the light source may be in a range 905 nm to 1550 nm.

In one or more embodiments, the diaphragm element may be disposed corresponding to the transmission path of the sensing light beam.

In one or more embodiments, the reflective element may be a microelectromechanical system configured to rotate to change emergent angles of the first light beam and the second light beam.

In one or more embodiments, the reflective element may be a two-dimensional scanning polarizer.

In one or more embodiments, the grating element may be a reflective grating.

In one or more embodiments, the optical sensing system may further comprise a first collimating element disposed on the transmission path of the first light beam and located between the light source and the beam splitting element.

In one or more embodiments, the first collimating element may be configured to collimate the first light beam.

In one or more embodiments, the optical sensing system may further comprise a second collimating element disposed on the transmission path of the sensing light beam and located between the diaphragm element and the sensing element.

In one or more embodiments, the second collimating element may be configured to collimate the sensing light beam.

In one or more embodiments, the optical sensing system may further comprise a light-receiving element disposed on the transmission path of the plurality of sub-light beams and located between the grating element and the diaphragm element.

The light-receiving element may be configured to adjust the plurality of sub-light beams to be transmitted to the diaphragm element.

Based on the above, the embodiments of the invention have at least one of the following advantages or effects. In the optical sensing system of the invention, the first light beam provided by the light source is transmitted by the beam splitting element to be transmitted to the reflective element and reflected to the target object. The target object reflects the second light beam with a sensing information and transmits the second light beam toward the beam splitting element along the original path, and transmits the second light beam to the grating element via the beam splitting element. After the second light beam is transmitted to the grating element, via the optical effect of the grating element, a plurality of sub-light beams with different emergent angles are formed. The diaphragm element allows a sub-light beam with a depth signal and having a specific wavelength range to pass through to become a sensing light beam, and blocks the other sub-light beams. In this way, the optical sensing system may effectively reduce light of other wavelengths from entering the sensing element via the combination of the grating element and the diaphragm element, thereby improving the sensing effect of the optical sensing system.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

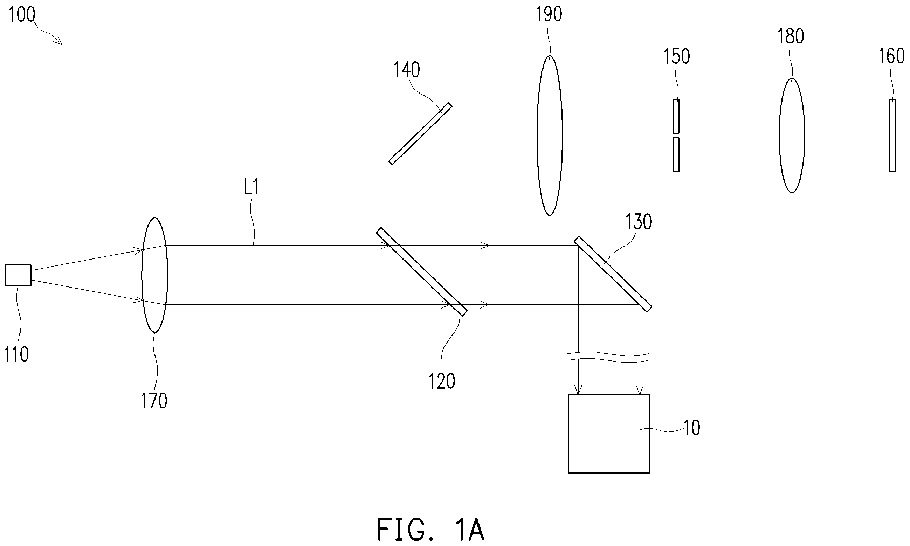

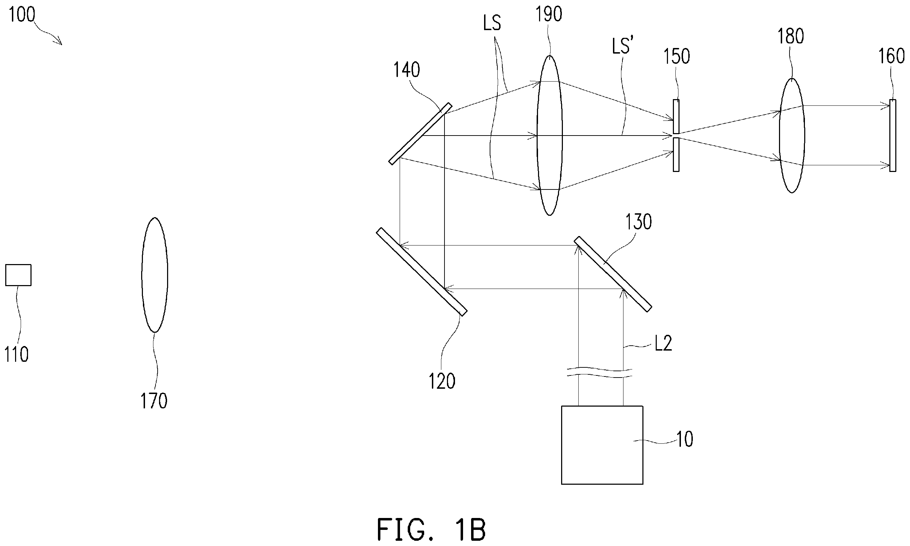

FIG. 1A and FIG. 1B are schematic diagrams of an optical sensing system in different time sequences according to an embodiment of the invention, respectively.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

FIG. 1A and FIG. 1B are schematic diagrams of an optical sensing system in different time sequences according to an embodiment of the invention, respectively. Please refer to FIG. 1A and FIG. 1B. An optical sensing system 100 of the present embodiment is configured to sense a target object 10. The optical sensing system 100 is, for example, applied to an optical radar of an electronic device (for example, an electronic device such as a smart phone, a tablet, or a computer). The target object 10 may be any tangible object with a surface, and the invention is not limited thereto.

The optical sensing system 100 includes a light source 110, a beam splitting element 120, a reflective element 130, a grating element 140, a diaphragm element 150, and a sensing element 160. Specifically, in the present embodiment, the optical sensing system 100 further includes a first collimating element 170, a second collimating element 180, and a light-receiving element 190.

The light source 110 is configured to provide a first light beam L1. In the present embodiment, the light source 110 is an infrared light-emitting element, such as a laser diode (LD) that emits infrared light in a wavelength range of 905 nm to 1550 nm, but the invention is not limited thereto. For example, the first light beam L1 provided by the light source 110 toward the beam splitting element 120 in the present embodiment is, for example, an infrared light beam with P polarization, but the invention is not limited thereto.

The beam splitting element 120 is disposed on a transmission path of the first light beam L1, and is configured to allow the first light beam L1 to pass through and to reflect a second light beam L2. In another embodiment, the beam splitting element 120 is configured to pass the second light beam L2 and reflect the first light beam L1. In the present embodiment, the polarization beam splitting element 120 is, for example, a polarization beam splitter configured to allow the first light beam L1 with P polarization to pass through, and to reflect the second light beam L2 with S polarization. In other words, the beam splitting element 120 of the present embodiment is a polarization beam splitter that transmits P-polarized light and reflects S-polarized light. However, in other embodiments, the first light beam L1 provided by the light source 110 may also be an infrared light beam with S polarization, and the beam splitting element 130 is a polarization beam splitter that transmits S-polarized light and reflects P-polarized light, and the invention is not limited thereto.

In addition, in the present embodiment, the first light beam L1 transmitted to the beam splitting element 120 is collimated light. Specifically, in the present embodiment, the first collimating element 170 is disposed on the transmission path of the first light beam L1 and located between the light source 110 and the beam splitting element 120 and configured to collimate the first light beam L1, so as to transmit the first light beam L1 to the beam splitting element 120 in a collimated light state. The first collimating element 170, for example, is composed of at least one lens with diopter, but the invention does not limit the type and form of the first collimating element 170.

The reflective element 130 is configured on the transmission path of the first light beam L1 and configured to reflect the first light beam L1 to the target object 10, and configured to reflect the second light beam L2 from the target object 10. In the present embodiment, the reflective element 130 is a reflective device of microelectromechanical systems (MEMS) configured to rotate to change the emergent angles of the first light beam L1 and the second light beam L2. Therefore, in the present embodiment, the angle of the reflective element 130 may be adjusted by the MEMS to achieve the effect of large-area scanning. In other embodiments, the reflective element 130 may also be a two-dimensional scanning polarizer, and the invention is not limited thereto.

The grating element 140 is disposed on the transmission path of the second light beam L2, and is configured to change the emergent angles of a plurality of sub-light beams LS and a sensing light beam LS' of the second light beam L2 according to the wavelengths of the sub-light beams LS and the sensing light beam LS'. In the present embodiment, the grating element 140 is a reflective grating, so the second light beam L2 is reflected and transmitted by the grating element 140, but the invention is not limited thereto. Specifically, the second light beam L2 transmitted from the beam splitting element 120 to the grating element 140 is composed of the plurality of sub-light beams LS with various wavelength ranges and the sensing light beam LS' with a depth signal and having a specific wavelength range (that is, equivalent to the infrared wavelength range provided by the light source 110) in the plurality of sub-light beams LS. Therefore, the second light beam L2 is transmitted to the grating element 140, and the grating element 140 reflects light beams in different wavelength ranges at different angles according to the designed optical structure. In other words, the focal planes of the sub-light beams LS and the sensing light beam LS' are all different. In other words, after the second light beam L2 is transmitted to the grating element 140, via the optical effect of the grating element 140, the plurality of sub-light beams LS and the sensing light beam LS' with different emergent angles are formed, and the sensing light beam LS' is a sensing light beam with a depth signal and having a specific wavelength range.

The diaphragm element 150 is disposed on the transmission path of the plurality of sub-light beams LS and the sensing light beam LS' and configured to allow a light beam including a specific wavelength range (i.e., the sensing light beam LS') in the second light beam L2 to pass and block the other plurality of sub-light beams LS. In the present embodiment, the aperture size of the diaphragm element 150 may be designed according to the desired receiving wavelength range of the sensing light beam LS'. For example, the aperture of the diaphragm element 150 may be designed to allow only light beams with a wavelength range of 10 nm to pass through, so as to filter out other non-sensing light and improve sensing accuracy. In other words, in the present embodiment, the diaphragm element 150 is provided corresponding to the transmission path of the sensing light beam LS'. The aperture size of the diaphragm element 150 may be adjusted according to requirements, and the invention is not limited thereto.

The sensing element 160 is disposed on the transmission path of the sensing light beam LS' and configured to sense the depth signal transmitted by the reflection of the target object 10. The sensing element 160 is, for example, a photosensitive element such as a charge coupled device (CCD) or a complementary metal oxide semiconductor transistor (CMOS), and the invention is not limited thereto.

In addition, in the present embodiment, the second collimating element 180 is disposed on the transmission path of the sensing light beam LS' and located between the diaphragm element 150 and the sensing element 160, and is configured to collimate the sensing light beam LS' so that the sensing light beam LS' is transmitted to the sensing element 160 in a collimated light state. The second collimating element 180 is similar to the first collimating element 170, and is, for example, composed of at least one lens with diopter, but the invention does not limit the type and the form of the second collimating element 180.

In the present embodiment, the light-receiving element 190 is disposed on the transmission path of the sub-light beams LS, located between the grating element 140 and the diaphragm element 150, and configured to adjust the sub-light beams LS and the sensing light beam LS' to be transmitted to the diaphragm element 150. The light-receiving element 190 is, for example, a lens or a lens group with positive diopter, but the invention does not limit the type and the form of the light-receiving element 190.

In this way, the optical sensing system 100 of the present embodiment may effectively reduce light of other wavelengths (that is, the sub-light beams LS other than the sensing light beam LS') from entering the sensing element 160 via the combination of the grating element 140 and the diaphragm element 150, so as to improve the sensing effect of the optical sensing system 100.

Based on the above, in the optical sensing system of the invention, the first light beam provided by the light source is transmitted by the beam splitting element to be transmitted to the reflective element and reflected to the target object. The target object reflects the second light beam with a sensing information and transmits the second light beam toward the beam splitting element along the original path, and transmits the second light beam to the grating element via the beam splitting element. After the second light beam is transmitted to the grating element, via the optical effect of the grating element, a plurality of sub-light beams with different emergent angles are formed. The diaphragm element allows a sub-light beam with a depth signal and having a specific wavelength range to pass through to become a sensing light beam, and blocks the other sub-light beams. In this way, the optical sensing system may effectively reduce light of other wavelengths from entering the sensing element via the combination of the grating element and the diaphragm element, thereby improving the sensing effect of the optical sensing system.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An optical sensing system (100) configured to sense a target object (10), wherein the optical sensing system (100) comprises a light source (110), a beam splitting element (120), a reflective element (130), a grating element (140), a diaphragm element (150), and a sensing element (160), wherein
the light source (110) is configured to provide a first light beam (LI);
the beam splitting element (120) is disposed on a transmission path of the first light beam (L1) and configured to allow the first light beam (L1) to pass through and to reflect the second light beam (L2);
the reflective element (130) is disposed on the transmission path of the first light beam (L1), configured to reflect the first light beam (L1) to the target object (10), and configured to reflect the second light beam (L2) from the target object (10);
the grating element (140) is disposed on a transmission path of the second light beam (L2) and configured to change emergent angles of a plurality of sub-light beams (LS) of the second light beam (L2) according to wavelengths of the plurality of sub-light beams (LS);
the diaphragm element (150) is disposed on a transmission path of the plurality of sub-light beams (LS) and configured to allow a sensing light beam (LS') comprising a specific wavelength range in the plurality of sub-light beams (LS) to pass and block the other plurality of sub-light beams; and
the sensing element (160) is disposed on a transmission path of the sensing light beam (LS').

2. The optical sensing system of claim 1, wherein focal planes of the plurality of sub-light beams (LS) are all different.

3. The optical sensing system of claim 1 or 2, wherein the light source (110) is an infrared light-emitting element, preferably a wavelength range of an infrared light emitted by the light source (110) is in a range 905 nm to 1550 nm.

4. The optical sensing system of claim 1, 2 or 3, wherein the diaphragm element (150) is disposed corresponding to the transmission path of the sensing light beam (LS).

5. The optical sensing system of any one of the preceding claims, wherein the reflective element (130) is a microelectromechanical system (MEMS) configured to rotate to change emergent angles of the first light beam (L1) and the second light beam (L2).

6. The optical sensing system of any one of the preceding claims, wherein the reflective element (130) is a two-dimensional scanning polarizer.

7. The optical sensing system of any one of the preceding claims, wherein the grating element (140) is a reflective grating.

8. The optical sensing system of any one of the preceding claims, wherein the optical sensing system (100) further comprises a first collimating element (170) disposed on the transmission path of the first light beam (L1).

9. The optical sensing system of claim 8, wherein the first collimating element (170) is located between the light source (110) and the beam splitting element (120), and/or the first collimating element (170) is configured to collimate the first light beam (LI).

10. The optical sensing system of any one of the preceding claims, wherein the optical sensing system (100) further comprises a second collimating element (180) disposed on the transmission path of the sensing light beam (LS').

11. The optical sensing system of claim 10, wherein the second collimating element (180) is located between the diaphragm element (150) and the sensing element (160), and/or the second collimating element (180) is configured to collimate the sensing light beam (LS').

12. The optical sensing system of any one of the preceding claims, wherein the optical sensing system (100) further comprises a light-receiving element (190) disposed on the transmission path of the plurality of sub-light beams (LS).

13. The optical sensing system of claim 11, wherein the light-receiving element (190) is located between the grating element (140) and the diaphragm element (150), and/or the light-receiving element (190) is configured to adjust the plurality of sub-light beams (LS) to be transmitted to the diaphragm element (150).
